(19) Europäisches Patentamt / European Patent Office / Office européen des brevets

(11) **EP 2 869 525 B1**

(12) **EUROPEAN PATENT SPECIFICATION**

(45) Date of publication and mention of the grant of the patent:
**09.10.2019 Bulletin 2019/41**

(21) Application number: **13810414.6**

(22) Date of filing: **24.06.2013**

(51) Int Cl.:
**H04L 29/06** (2006.01)     **H04L 29/08** (2006.01)

(86) International application number:
**PCT/CN2013/077801**

(87) International publication number:
**WO 2014/000617 (03.01.2014 Gazette 2014/01)**

(54) **METHOD AND APPARATUS FOR LOCATING SESSION INITIATION PROTOCOL DIALOG**

VERFAHREN UND VORRICHTUNG ZUR LOKALISIERUNG EINES SITZUNGSEINLEITUNGSPROTOKOLLDIALOGS

PROCÉDÉ ET APPAREIL PERMETTANT DE LOCALISER UN DIALOGUE DE PROTOCOLE D'INITIATION DE SESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2012 CN 201210217558**

(43) Date of publication of application:
**06.05.2015 Bulletin 2015/19**

(73) Proprietor: **ZTE Corporation**
**Shenzhen, Guangdong 518057 (CN)**

(72) Inventor: **GUAN, Jianchi**
**Shenzhen**
**Guangdong 518057 (CN)**

(74) Representative: **Mozzi, Matteo et al**
**Jacobacci & Partners S.p.A.**
**Via Senato, 8**
**20121 Milano (IT)**

(56) References cited:
WO-A1-2011/038554     CN-A- 102 739 673
US-A1- 2008 162 634     US-A1- 2010 042 731
US-A1- 2011 099 282

• **ROSENBERG CISCO SYSTEMS H SCHULZRINNE COLUMBIA UNIVERSITY R MAHY J ET AL: "An INVITE-Initiated Dialog Event Package for the Session Initiation Protocol (SIP); rfc4235.txt",** 20051101, 1 November 2005 (2005-11-01), XP015043182, ISSN: 0000-0003

## Description

### Technical Field

The present invention relates to the field of communications, including e.g., a method and device for positioning Session Initiation Protocol (SIP) dialog.

### Background

In an IP Multimedia Subsystem (IMS), SIP is adopted as a call control protocol.

A dialog is a core concept of a SIP network defined in a Request For Comments (RFC) 3261. The dialog represents a peer-to-peer SIP relationship kept for a period of time between two User Agents (UA). The dialog makes the sequential transmission of messages between the UAs and requesting for a correct route between the two UAs easier. The dialog can be considered as a context relationship for interpreting SIP messages. In the protocol, a dialog ID includes a Call-ID, a Local-Tag, a remote Tag and the like. A core network element of the IMS needs to process a great number of SIP messages, so that after the SIP messages are received, if the dialog to which the SIP messages belong can be rapidly determined, the performance of the network element can be improved.

Usually, for a SIP response, an affair should be matched firstly, and the affair is usually associated with the dialog, so that the dialog matching of the SIP response is usually not a problem. For a SIP request, an initial request does not need dialog positioning, and dialog positioning is mainly for an in-dialog request.

At present, a common dialog positioning mode is to acquire Call-ID, From-Tag and To-Tag character strings from the SIP request for Hash location, thereby determining the dialog corresponding to the request. In the above-mentioned process, the network element needs to extract header parameter contents such as the Call-ID, a From-Tag and a To-Tag from a SIP code stream, and strings and Hash locate the above related contents, so that a dialog positioning process is more complex and lower in positioning speed.

The US Patent Application US2010/042731 discloses methods, systems, and computer readable media for session initiation protocol (SIP) dialog identification.

The document "An INVITE-Initiated Dialog Event Package for the Session Initiation Protocol (SIP); rfc 4235.txt", 20051101, 1 November 2005, discloses that the SIP Events framework defines general mechanisms for subscription to, and notification of, events within SIP networks.

### Summary

A method and a device for positioning a SIP dialog in the present invention, so as to at least solve the problems of complexity and low positioning speed of an implementation method for positioning a dialog corresponding to an in-dialog SIP message in a related art.

According to one aspect of the present invention, a method for positioning SIP dialog is provided according to independent claim 1. A device for positioning a SIP dialog is provided according to independent claim 6. Further detailed embodiments are defined in the dependent claims.

Such an implementation mode is simple and high in positioning speed, and the performance of the network element is improved.

### Brief Description of the Drawings

Drawings, provided for further understanding of the present invention and forming a part of the specification, are used to explain the present invention together with embodiments of the present invention rather than to limit the present invention. In the accompanying drawings:

Fig. 1 is a flowchart of a method for positioning a SIP dialog according to an embodiment of the present invention;
Fig. 2 is a schematic diagram of a basic calling flow of a SIP proxy according to preferred embodiment 1 of the present invention;
Fig. 3 is a schematic diagram of implementation of a flow when an SIP UA is a calling party in a contact-uri way according to preferred embodiment 2 of the present invention;
Fig. 4 is a schematic diagram of implementation of a flow when an SIP UA is a called party in a contact-uri way according to preferred embodiment 2 of the present invention;
Fig. 5 is a schematic diagram of implementation of a flow when an SIP UA is a calling party in a Local-Tag way according to preferred embodiment 3 of the present invention;
Fig. 6 is a schematic diagram of implementation of a flow when an SIP UA is a called party in a Local-Tag way according to preferred embodiment 3 of the present invention;
Fig. 7 is a structural diagram of a SIP dialog positioning device according to an embodiment of the present invention;
Fig. 8 is a structural diagram of a SIP proxy according to an embodiment of the present invention;
Fig. 9 is a structural diagram of a SIP proxy according to a preferred embodiment of the present invention;
Fig. 10 is a structural diagram of an SIP UA according to an embodiment of the present invention; and
Fig. 11 is a structural diagram of an SIP UA according to a preferred embodiment of the present invention.

## Detailed Description of the Embodiments

It should be noted that the embodiments of the present invention and the characteristics in the embodiments can be combined if there is no conflict. The present invention is described below with reference to the drawings and the embodiments in detail.

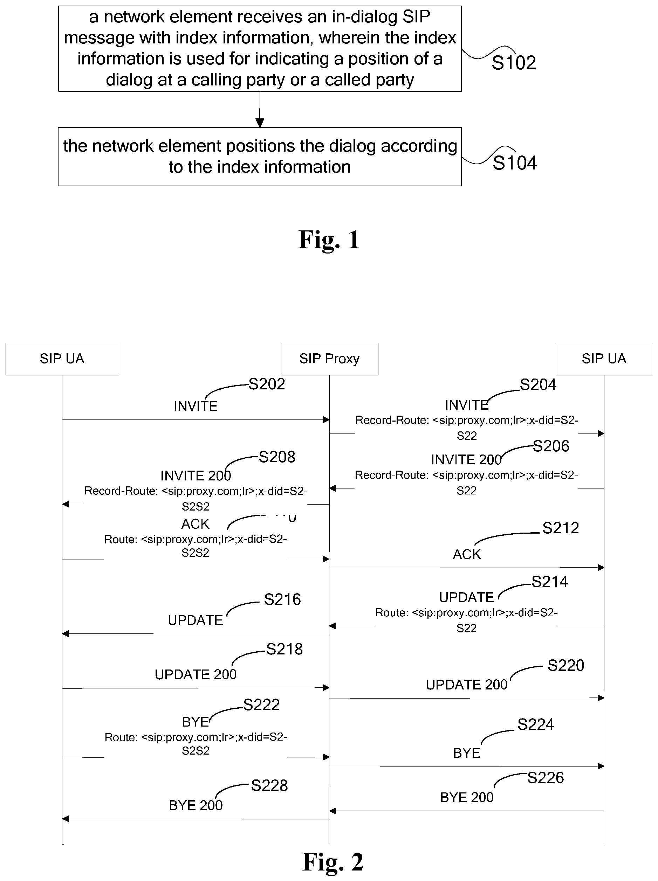

A method for positioning a SIP dialog is provided in the embodiment of the present invention, Fig. 1 is a flowchart of a method for positioning a SIP dialog according to an embodiment of the present invention, and as shown in Fig. 1, the method comprises the following steps S102 to S104.

S102, a network element receives an in-dialog SIP message carrying index information, wherein the index information is used for indicating a position of a dialog at a calling party or a called party.

S104, the network element positions the dialog according to the index information.

In the related art, an implementation method for positioning the dialog corresponding to the in-dialog SIP message is more complex and lower in positioning speed. In the embodiment, the index information for indicating the position of the dialog at the calling party or the called party is carried in the in-dialog SIP message, and the dialog is positioned according to the index information, so that such an implementation mode is simple and high in positioning speed, and the performance of the network element is improved.

Two kinds of network element roles are defined in the SIP: a SIP proxy and an SIP UA, and the dialog positioning of the two is respectively introduced below.

(1) the network element is a SIP proxy

Before S102, the method further comprises that: the SIP proxy adds a first index information to an initial message received from the calling party, wherein the first index information is used for indicating the position of the current dialog at the calling party; and the SIP proxy transmits the initial message carrying the first index information to the called party. Thus, the position of the current dialog at the calling party can be acquired.

According to an embodiment of the present invention, after the SIP proxy transmits the initial message carrying the first index information to the called party, the method further comprises that: the SIP proxy receives a response message carrying the first index information from the called party; the SIP proxy modifies the first index information, wherein a modified first index information is used for indicating the position of the current dialog at the called party; and the SIP proxy transmits the response message carrying the modified first index information to the calling party. Thus, the position of the current dialog at the called party can be acquired.

The first index information or the modified index information will be carried in the subsequent in-dialog SIP message, and S102 comprises that: the SIP proxy receives the in-dialog SIP message carrying the modified first index information from the calling party, or receives the in-dialog SIP message carrying the first index information from the called party.

S104 comprises that: the SIP proxy acquires the modified first index information or the first index information from the in-dialog SIP message; and the SIP proxy positions the dialog according to the modified first index information or the first index information.

(2) The network element is an SIP UA, and there are two conditions, wherein the SIP UA serves as the calling party of the dialog under one condition, and serves as the called party of the dialog under the other condition.

A. the SIP UA is the calling party of the dialog

Before S102, the method further comprises that: the SIP UA transmits an initial message carrying second index information to the called party, wherein the second index information is used for indicating the position of the current dialog at the calling party. Thus, the position of the current dialog at the calling party (namely the SIP UA) can be acquired.

The second index information will be carried in a subsequent in-dialog SIP message, and S102 comprises that: the SIP UA receives the in-dialog SIP message carrying the second index information from the called party.

According to an embodiment of the present invention, S104 comprises that: the SIP UA acquires the second index information from the in-dialog SIP message; and the SIP UA positions the current dialog according to the second index information.

B. the SIP UA is the called party of the dialog

Before S102, the method further comprises that: the SIP UA receives the initial message from the calling party; and the SIP UA transmits a response message carrying third index information to the calling party, wherein the third index information is used for indicating the position of the current dialog at the called party. Thus, the position of the current dialog at the called party (namely the SIP UA) can be acquired.

The third index information will be carried in a subsequent in-dialog SIP message, and S102 comprises that: the SIP UA receives the in-dialog SIP message carrying the third index information from the calling party.

According to an embodiment of the present invention, S104 comprises that: the SIP UA acquires the third index information from the in-dialog SIP message; and the SIP UA positions the current dialog according to the third index information.

According to an embodiment of the present invention, the index information is carried by one of the following fields: Request-uri, contact, from, to, Route and Record-Route.

From the above, a header parameter in the SIP message is expanded in the embodiment of the present invention, and the network element generates the parameter when structuring an initial request or a response to the initial request. The parameter is returned through an in-dialog request received by the network element, and the network element directly positions the dialog through the expanded parameter in the returned in-dialog request. For a subsequent request in the in-dialog, It is not required to position the dialog by virtue of a combination of parameters such as a Call-ID, a From-Tag, a To-Tag, etc in the embodiment of the present invention, and a dialog index can be directly acquired from the SIP message, so that high speed and high performance are achieved.

Two network element roles are defined in SIP: a proxy and a UA, and for different network element roles, specific implementation schemes are different, and are respectively described below:
For a proxy network element, it is specified in a basic protocol RFC 3261 of SIP that when the proxy network element receives a creating dialog request, if a dialog created according to the request is expected to be reserved and a subsequent request still will pass through the proxy network element, the proxy network element must add a Record-Route header field value to this copy (namely the message forwarded to the next network element), and the added header field value should be before other existing Record-Route header fields. In the subsequent request in the dialog created according to the request, the Record-Route header field value added by the proxy network element can be returned through a Route header. By virtue of the above-mentioned mechanism, a newly added parameter is expanded in Record-Route, and an instance index created for the dialog on the proxy network element is carried in the parameter, so that the proxy network element can directly acquire the corresponding dialog instance index from Route after receiving the subsequent request.

For a UA network element, two schemes can be considered. Scheme 1, it is specified in the basic protocol RFC 3261 of SIP that a Local-Tag is generated by the UA network element, and is returned as a To-Tag in a subsequent request, so that a generation rule of the Local-Tag is changed, wherein a dialog index information is carried in the Local-Tag, and the SIP UA, when receiving the in-dialog request message, acquires the dialog index information from the To-Tag to position the dialog; and scheme 2, according to the basic protocol RFC 3261 of SIP, local-contact-uri is generated by the UA network element, and is returned as Request-uri in the subsequent request, so that an expanded parameter is added in contact-uri, wherein the dialog index information is carried in the expanded parameter, and the SIP UA, when receiving the in-dialog request message, positions the dialog by virtue of the newly added parameter in Request-uri.

It is noted that the dialog index information is carried in the SIP message, and a SIP field capable of carrying the index information includes Request-uri/contact/from/to/route/record-route.

Detailed description will be given below with reference to the preferred embodiments.

Preferred embodiment 1

The specific implementation of expanded parameter added by the proxy network element through Record-Route/Route is described in the preferred embodiment.

A Backus-Naur Form (BNF) about a Record-Route/Route header in RFC 3261 is as follows:

Record-Route    =    "Record-Route"  HCOLON  rec-route  *(COMMA rec-route)

rec-route        =    name-addr *( SEMI rr-param )

rr-param        =    generic-param

Route          =    "Route" HCOLON route-param *(COMMA route-param)

route-param   =   name-addr *( SEMI rr-param )

An rr-param parameter is expanded in the preferred embodiment. The definition of the expanded parameter is related to the specific implementation, and an expansion example under one implementation mode is given here only:

x-did-param    =    "x-did" EQUAL module "-" dialog-index

module =   1*DIGIT

;the number of a module where the dialog is

dialog-index =    1*DIGIT

;dialog index

It should be noted that, in order to improve the reliability, x-did-param expansion can also be implemented in name-addr, for example:

    Record-Route: <sip:proxy.com;lr>;x-did=1-12
    Route: < sip:proxy.com;lr >;x-did=1-12

Description will be given blow with reference to Fig. 2, Fig. 2 is a schematic diagram of a basic calling flow of a SIP proxy according to preferred embodiment 1 of the present invention, and as shown in Fig. 2, the flow includes the following steps that:

S202-S204, the SIP proxy receives initial INVITE, creates an incoming dialog and an outgoing dialog, forwards the INVITE to the next network element, and in order to receive a subsequent request, the SIP Proxy adds itself as Record-Route in the forwarded INVITE. In the preferred embodiment, an expanded parameter x-did is added to a header, wherein the parameter represents a corresponding dialog index of a call on the proxy network element, and in Fig. 2, x-did=1-12, which shows that the corresponding outgoing dialog is on a module 1 and the index is 12.

S206-S208, the SIP proxy receives initial INVITE 200, wherein a route set information is carried in this message, the SIP proxy modifies the Record-Route added itself in the forwarded INVITE 200, and modifies the expanded parameter x-did into an incoming dialog index, and in Fig. 2, x-did=1-11, which shows that the corresponding incoming dialog is on the module 1 and the index is 11.

S210-S212, the SIP proxy receives ACK, where the route set information is carried in this message, and the SIP proxy acquires a dialog index of a dialog where the message is through the expanded parameter x-did in top-Route. In Fig. 2, x-did=1-11, which shows that the corresponding incoming dialog is on the module 1 and the index is 11. The SIP proxy forwards the ACK.

S214-S216, the SIP proxy receives UPDATE from a called side, wherein the route set information is carried in the message. The SIP proxy acquires a dialog index of a dialog where the message is through the expanded parameter x-did in top-Route. In Fig. 2, x-did=1-11, which shows that the corresponding incoming dialog is on the module 1 and the index is 11. The SIP proxy forwards the UPDATE.

S218-S220, the SIP proxy forwards the UPDATE.

S222-S224, the SIP proxy receives BYE from a calling side, the route set information is carried in the message. The SIP proxy acquires a dialog index of a dialog where the message is through the expanded parameter x-did in top-Route. In Fig. 2, x-did=1-11, which shows that the corresponding incoming dialog is on the module 1 and the index is 11. The SIP proxy forwards the BYE (ending).

S226-S228, the SIP proxy forwards BYE 200 OK.

Preferred embodiment 2

The specific implementation of expanded parameter added by the UA network element through contact-uri is described in the preferred embodiment.

An expanded parameter is added in contact-uri in the preferred embodiment. The definition of the expanded parameter is related to the specific implementation, and an expansion example under one implementation mode is given here only:

x-did-param     = "x-did" EQUAL module "-" dialog-index
module          = 1*DIGIT

;the number of a module where the dialog is

dialog-index =    1*DIGIT
;dialog index

For example:

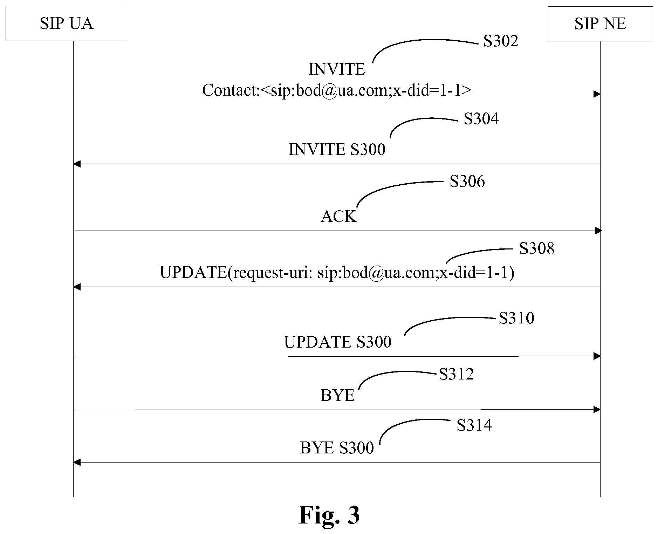

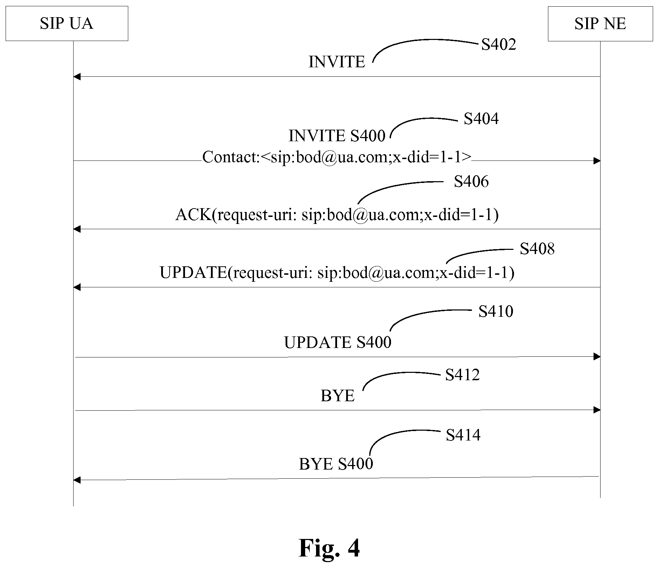

contact: <sip:bod@ua.com;x-did=1-1>
Description will be given below with reference to Fig. 3 and Fig. 4.

Fig. 3 is a schematic diagram of implementation of a flow when an SIP UA is a calling party in a contact-uri way according to preferred embodiment 2 of the present invention, and as shown in Fig. 3, the flow includes the following steps that:

S302, the SIP UA, serving as the calling party, transmits an initial INVITE message to a next-hop network element (namely the SIP NE shown in Fig. 3), wherein, in a Contact header in the initial INVITE message, an expanded parameter x-did is added in contact-uri, wherein the parameter represents a dialog index of a call on the UA network element, and in Fig. 3, x-did=1-1, which shows that a dialog corresponding to the call is on a module 1 and the index is 1.
S304-S306, subsequent INVITE 200 OK and ACK thereof are processed, which are uninvolved in the preferred embodiment.
S308, the SIP UA receives an in-dialog request UPDATE from a called party, wherein a request-uri content in the request is consistent with a contact-uri content in the initial request INVITE. The SIP UA acquires the dialog index of a dialog where the call is through the expanded parameter x-did in the request-uri. In Fig. 3, x-did=1-1, which shows that the corresponding dialog is on the module 1 and the index is 1.
S310-S314, a subsequent message is processed, which is uninvolved in the preferred embodiment.

Fig. 4 is a schematic diagram of implementation of a flow when an SIP UA is a called party in a contact-uri way according to preferred embodiment 2 of the present invention, and as shown in Fig. 4, the flow includes the following steps that:

S402, the SIP UA, serving as the called party, receives an initial INVITE message.
S404, the SIP UA returns 200 OK in response to the initial INVITE message, wherein, in a Contact header of the response message, an expanded parameter x-did is added in contact-uri. The parameter represents a dialog index of a call on the UA network element, and in Fig. 4, x-did=1-1, which shows that a dialog corresponding to the call is on a module 1 and the index is 1.
S406, the SIP UA receives an in-dialog request ACK from a calling party, wherein a request-uri content in the request is consistent with a contact-uri content in the 200 OK of the initial INVITE message. The SIP UA acquires the dialog index of a dialog where the call is through the expanded parameter in request-uri. In Fig. 4, x-did=1-1, which shows that the corresponding dialog is on the module 1 and the index is 1.
S408, the SIP UA receives an in-dialog request UPDATE from the calling party, wherein a request-uri content in the request is consistent with a contact-uri content in the 200 OK of the initial INVITE message. The SIP UA acquires the dialog index of the dialog where the call is through the expanded parameter x-did in request-uri. In Fig. 4, x-did=1-1, which shows that the corresponding dialog is on the module 1 and the index is 1.
S410-S414, a subsequent message is processed, which is uninvolved in the preferred embodiment.

Preferred embodiment 3

The specific implementation of expanded parameter added by the UA network element through the Local-Tag is described in the preferred embodiment.

A BNF about a From/To header in RFC 3261 is as follows:

```
From         = ("From" / "f") HCOLON from-spec
from-spec    = (name-addr / addr-spec)
               *(SEMI from-param)
from-param   = tag-param / generic-param
tag-param    = "tag" EQUAL token
To           = ("To" / "t") HCOLON (name-addr
               / addr-spec)*( SEMI to-param)
to-param     = tag-param / generic-param
token        = 1*(alphanum / "-" /"." /"!" /"%" / "*"
               / "_" / "+" / "'" / "''" / "~" )
```

A tag-param parameter generated by the network element is limited in the preferred embodiment to enable the dialog index information is carried in the tag-param parameter, and an expansion example under one implementation mode is given here only:

```
tag-param    = "tag" EQUAL randstr "-" module "-" dialog-index
randstr      = 1*(alphanum)
module       = 1*DIGIT
```

;the number of a module where the dialog is

```
             dialog-index    = 1*DIGIT
             ;dialog index
```

For example:

From: <sip:alice@ua.com>;tag=abxcd-1-1
To: <sip:alice@ua.com>;tag=abxcd-1-1

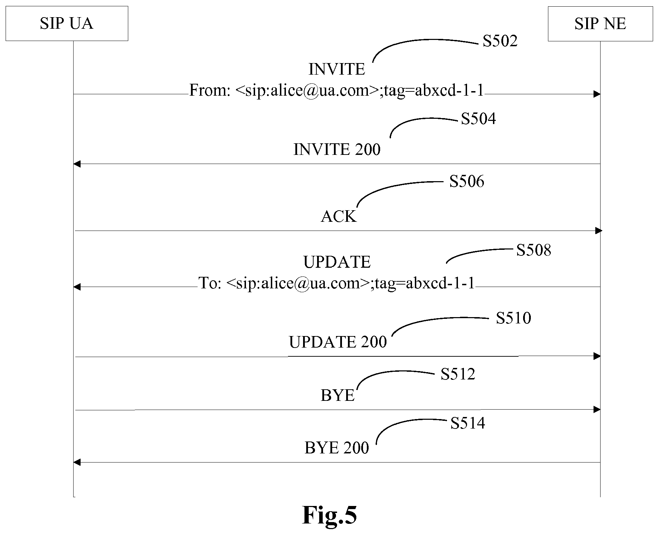

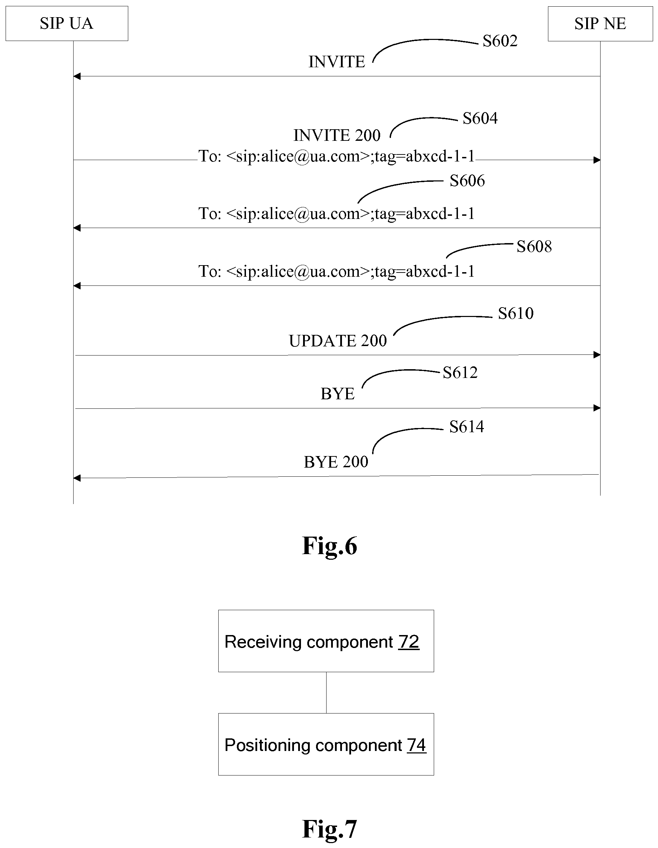

Description will be given blow with reference to Fig. 5 and Fig. 6.

Fig. 5 is a schematic diagram of implementation of a flow when an SIP UA is a calling party in a Local-Tag way according to preferred embodiment 3 of the present invention, and as shown in Fig. 5, the flow includes the following steps that:

S502, the SIP UA, serving as the calling party, transmits an initial INVITE request to a next-hop network element, wherein a From-Tag in the INVITE request is generated according to the above-mentioned grammar, and the dialog index information is carried in the From-Tag, and in Fig. 5, tag=abxcd-1-1, which shows that a dialog corresponding to a call is on a module 1 and an index is 1.

S504-S506, subsequent INVITE 200 OK and ACK thereof are processed, which are uninvolved in the preferred embodiment.

S508, the SIP UA receives an in-dialog request UPDATE from a called party, wherein a To-Tag content in the request is consistent with the From-Tag in the initial INVITE request. The SIP UA acquires a dialog index of the dialog where the call is from the To-Tag of UPDATE. In Fig. 5, tag=abxcd-1-1, which shows that the corresponding dialog is on the module 1 and the index is 1.

S510-S514, a subsequent message is processed, which is uninvolved in the preferred embodiment.

Fig. 6 is a schematic diagram of implementation of a flow when an SIP UA is a called party in a Local-Tag way according to preferred embodiment 3 of the present invention, and as shown in Fig. 6, the flow includes the following steps that:

S602, the SIP UA, serving as the called party, receives an initial INVITE message.

S604, the SIP UA returns 200 OK in response to the initial INVITE message, wherein a To-Tag of the response message is generated according to the above-mentioned grammar, and dialog index information is carried by the To-Tag, and in Fig. 6, tag=abxcd-1-1, which shows that a dialog corresponding to a call is on a module 1 and an index is 1.

S606, the SIP UA receives an in-dialog request ACK from a calling party, wherein a request-uri content in the request is consistent with a To-Tag content in the 200 OK of the initial INVITE message. The SIP UA acquires a dialog index of a dialog where the call is from the To-Tag. In Fig. 6, x-did=1-1, which shows that the corresponding dialog is on the module 1 and the index is 1.

S608, the SIP UA receives an in-dialog request UPDATE from the calling party, wherein a To-Tag content in the request is consistent with that in the 200 OK of the initial INVITE message. The SIP UA acquires the dialog index of the dialog where the call is from the To-Tag. In Fig. 6, x-did=1-1, which shows that the corresponding dialog is on the module 1 and the index is 1.

S610-S614, a subsequent message is processed, which is uninvolved in the present invention.

It is noted that the steps shown in the flowcharts in the drawings can be executed in a computer system, for example, a group of computers, capable of executing an instruction, and moreover, although a logic sequence is shown in the flowcharts, the shown or described steps can be executed according to a sequence different from the logic sequence under a certain condition.

A SIP dialog positioning device is further provided in the embodiment of the present invention, which is applied to a network element. Fig. 7 is a structural diagram of a device for positioning a SIP dialog according to an embodiment of the present invention, and as shown in Fig. 7, the device includes a receiving component 72 and a positioning component 74.

Wherein, the receiving component 72 is configured to receive an in-dialog SIP message carrying index information, wherein the index information is used for indicating a position of a dialog at a calling party or a called party; and the positioning component 74, connected to the receiving component 72, is configured to position the dialog according to the index information carried by the in-dialog SIP message received by the receiving component 72.

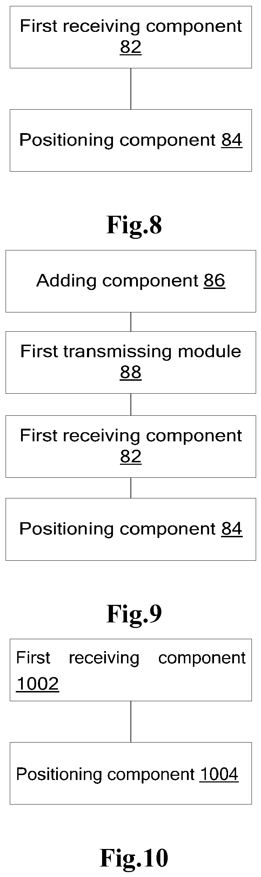

A SIP proxy is further provided in the embodiment of the present invention. the SIP proxy can be used for implementing the above-mentioned method for positioning a SIP dialog. Fig. 8 is a structural diagram of a SIP proxy according to an embodiment of the present invention, and as shown in Fig. 8, the SIP proxy includes a first receiving component 82 and a positioning component 84.

Wherein, the first receiving component 82 is configured to receive an in-dialog SIP message carrying index information, wherein the index information is used for indicating a position of a dialog at a calling party or a called party; and the positioning component 84, connected to the first receiving component 82, is configured to position the dialog according to the index information.

As shown in Fig. 9, the SIP proxy further includes: an adding component 86, which is configured to add a first index information to an initial message received from the calling party, wherein the first index information is used for indicating the position of the current dialog at the calling party; and a first transmissing component 88, which is connected to the adding component 86 and configured to transmit the initial message carrying the first index information to the called party.

According to an embodiment of the present invention, the SIP proxy further includes: a second receiving component, which is configured to receive a response message carrying the first index information from the called party; a modifying component, which is connected to the second receiving component and configured to modify the first index information, wherein the modified first index information is used for indicating the position of the current dialog at the called party; and a second transmissing component, which is connected to the modifying component and configured to transmit the response message carrying the modified first index information modified by the modifying module to the calling party.

According to an embodiment of the present invention, the first receiving component 82 includes: a receiving element, which is configured to receive the in-dialog SIP message carrying the modified first index information from the calling party, or receive the in-dialog SIP message carrying the first index information from the called party. The positioning component 84 includes: an acquiring element, which is configured to acquire the modified first index information or the first index information from the in-dialog SIP message; and a positioning element, which is connected to the acquiring element and configured to position the dialog according to the modified first index information or the first index information acquired by the acquiring element.

According to an embodiment of the present invention, the index information is carried by one of the following fields: Route and Record-Route.

AN SIP UA is further provided in the embodiment of the present invention. The SIP can be used for implementing the above-mentioned method for positioning a SIP dialog. Fig. 10 is a structural diagram of an SIP UA according to an embodiment of the present invention, and as shown in Fig. 10, the SIP UA includes a first receiving component 1002 and a positioning component 1004.

Wherein, the first receiving component 1002 is configured to receive an in-dialog SIP message carrying index information, wherein the index information is used for indicating a position of a dialog at a calling party or a called party; and the positioning component 1004, connected to the first receiving component 1002, is configured to position the dialog according to the index information.

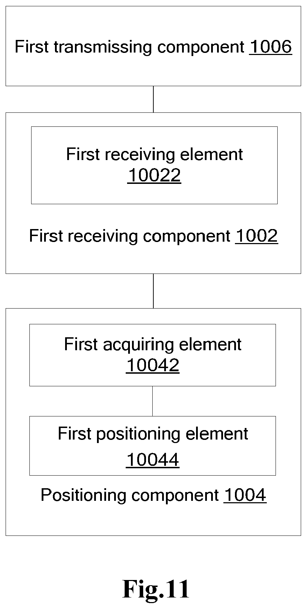

As shown in Fig. 11, the SIP UA further includes: a first transmissing component 1006, which is configured to, under the condition that the SIP UA is the calling party of the dialog, transmit an initial message carrying second index information to the called party, wherein the second index information is used for indicating the position of the current dialog at the calling party. The first receiving component 1002 includes: a first receiving element 10022, which is configured to receive the in-dialog SIP message carrying the second index information from the called party. The positioning component 1004 includes: a first acquiring element 10042, configured to acquire the second index information from the in-dialog SIP message; and a first positioning element 10044, which is connected to the first acquiring element 10042 and configured to position the current dialog according to the second index information acquired by the first acquiring element 10042.

According to an embodiment of the present invention, the SIP UA further includes: a second receiving component, which is configured to, under the condition that the SIP UA is the called party of the dialog, receive the initial message from the calling party; and a second transmissing component, configured to transmit a response message carrying third index information to the calling party, wherein the third index information is used for indicating the position of the current dialog at the called party.

According to an embodiment of the present invention, the first receiving component 1002 includes: a second receiving element, which is configured to receive the in-dialog SIP message carrying the third index information from the calling party. The positioning component 1004 includes: a second acquiring element, which is configured to acquire the third index information from the in-dialog SIP message; and a second positioning element, which is configured to position the current dialog according to the third index information.

According to an embodiment of the present invention, the index information is carried by one of the following fields: Request-uri, contact, from and to.

From the above, according to the embodiments of the present invention, a method and a device for positioning a SIP dialog are provided. The index information for indicating the position of the dialog at the calling party or the called party is carried in the in-dialog SIP message, and the dialog is positioned according to the index information, so that such an implementation mode is simple and high in positioning speed, and the performance of the network element is improved.

Obviously, a technician of the field should know that each module or step of the present invention can be implemented by a universal computing device, and the modules or steps can be concentrated on a single computing device or distributed on a network formed by a plurality of computing devices, and can optionally be implemented by programmable codes executable for the computing devices, so that the modules or steps can be stored in a storage device for execution with the computing devices, or can form each integrated circuit module, or multiple modules or steps therein can form a single integrated circuit module for implementation. As a consequence, the present invention is not limited to any specific hardware and software combination.

The above is only the preferred embodiment of the present invention and not intended to limit the present invention, and for the technician of the field, the present invention can have various modifications and variations. Any modifications, equivalent replacements, improvements and the like shall fall within the scope of protection of the present invention as defined in the appended claims.

## Claims

1. A method for positioning Session Initiation Protocol, SIP, dialog, **characterized by** comprising:

   receiving, by a network element, an in-dialog SIP message carrying index information, wherein the index information is used for indicating a position of a dialog at a calling party or a called party (S102); and
   positioning, by the network element, the dialog according to the index information (S104);.
   wherein based on that the network element is an SIP proxy, before receiving, by the network element, the in-dialog SIP message carrying the index information, further comprising: adding, by the SIP proxy, a first index information to an initial message received from the calling party, wherein the first index information is used for indicating the position of the current dialog at the calling party; and transmitting, by the SIP proxy, the initial message carrying the first index information to the called party; or
   wherein based on that the network element is an SIP User Agent, UA, and is the calling party of the dialog, before receiving, by the network element, the in-dialog SIP message carrying the index information, further comprising: transmitting, by the SIP UA, an initial message carrying second index information to the called party, wherein the second index information is used for indicating the position of the current dialog at the calling party; or, wherein based on that the network element is an SIP UA and is the called party of the dialog, before receiving, by the network element, the in-dialog SIP message carrying the index information, further comprising: receiving, by the SIP UA, the initial message from the calling party; and transmitting, by the SIP UA, a response message carrying third index information to the calling party, wherein the third index information is used for indicating the position of the current dialog at the called party.

2. The method according to claim 1, **characterized in that**, after transmitting, by the SIP proxy, the initial message carrying the first index information to the called party, further comprising:

receiving, by the SIP proxy, a response message carrying the first index information from the called party; modifying, by the SIP proxy, the first index information, **characterized in that**, a modified first index information is used for indicating the position of the current dialog at the called party; and transmitting, by the SIP proxy, the response message carrying the modified first index information to the calling party; receiving, by the network element, the in-dialog SIP message carrying the index information comprises: receiving, by the SIP proxy, the in-dialog SIP message carrying the modified first index information from the calling party, or receiving, by the SIP proxy, the in-dialog SIP message carrying the first index information from the called party; positioning, by the network element, the dialog according to the index information comprises: acquiring, by the SIP proxy, the modified first index information or the first index information from the in-dialog SIP message; and positioning, by the SIP proxy, the dialog according to the modified first index information or the first index information.

3. The method according to claim 1, **characterized in that**, receiving, by the network element, the in-dialog SIP message carrying the index information comprises:

receiving, by the SIP UA, the in-dialog SIP message carrying the second index information from the called party; positioning, by the network element, the dialog according to the index information comprises: acquiring, by the SIP UA, the second index information from the in-dialog SIP message; and positioning, by the SIP UA, the current dialog according to the second index information.

4. The method according to claim 1, **characterized in that**, receiving, by the network element, the in-dialog SIP message carrying the index information comprises: receiving, by the SIP UA, the in-dialog SIP message carrying the third index information from the calling party; positioning, by the network element, the dialog according to the index information comprises: acquiring, by the SIP UA, the third index information from the in-dialog SIP message; and positioning, by the SIP UA, the current dialog according to the third index information.

5. The method according to any one of claims 1 to 4, **characterized in that**, the index information is carried by one of the following fields: Request-uri, contact, from, to, Route and Record-Route.

6. A device for positioning Session Initiation Protocol, SIP, dialog, applied to a network element, **characterized by** comprising:

a receiving component (72), configured to receive an in-dialog SIP message carrying index information, wherein the index information is used for indicating a position of a dialog at a calling party or a called party; and a positioning component (74), configured to position the dialog according to the index information; wherein the device further comprises:

an adding component (86), configured to, based on that the network element is a SIP proxy, add a first index information to an initial message received from the calling party, wherein the first index information is used for indicating the position of the current dialog at the calling party; and a first transmitting component (88), configured to transmit the initial message carrying the first index information to the called party; wherein the device further comprising: a first transmissing component (1006), configured to, based on that the network element is a SIP User Agent, UA, and the SIP UA is the calling party of the dialog, transmit an initial message carrying second index information to the called party, wherein the second index information is used for indicating the position of the current dialog at the calling party;

wherein the device further comprising: a second receiving component, configured to, based on that the network element is a SIP UA and the SIP UA is the called party of the dialog, receive the initial message from the calling party; and a second transmissing component, configured to transmit a response message carrying third index information to the calling party, wherein the third index information is used for indicating the position of the current dialog at the called party.

**7.** The device according to claim 6, further comprising:

a second receiving component, configured to receive a response message carrying the first index information from the called party;

a modifying component, configured to modify the first index information, wherein a modified first index information is used for indicating the position of the current dialog at the called party; and

a second transmitting component, configured to transmit the response message carrying the modified first index information to the calling party;

the first receiving component (82) comprises: a receiving element, configured to receive the in-dialog SIP message carrying the modified first index information from the calling party, or receive the in-dialog SIP message carrying the first index information from the called party;

the positioning component (84) comprises: an acquiring element, configured to acquire the modified first index information or the first index information from the in-dialog SIP message; and a positioning element, configured to position the dialog according to the modified first index information or the first index information.

**8.** The device according to claim 6, **characterized in that**, the first receiving component (1002) comprises:

a first receiving element (10022), configured to receive the in-dialog SIP message carrying the second index information from the called party;

the positioning component (1004) comprises: a first acquiring element (10042), configured to acquire the second index information from the in-dialog SIP message; and a first positioning element (10044), configured to position the current dialog according to the second index information.

**9.** The device according to claim 6, **characterized in that**, the first receiving component comprises:

a second receiving element, configured to receive the in-dialog SIP message carrying the third index information from the calling party;

the positioning component comprises: a second acquiring element, configured to acquire the third index information from the in-dialog SIP message; and a second positioning element, configured to position the current dialog according to the third index information.

**Patentansprüche**

**1.** Verfahren zur Positionierung eines Sitzungseinleitungsprotokolldialogs, SIP-Dialogs, dadutrch gekennzeichnett, dass es Folgendes umfasst:

Empfangen einer In-Dialog-SIP-Nachricht, die Indexinformationen enthält, durch ein Netzwerkelement, wobei die Indexinformationen zum Anzeigen einer Position eines Dialogs bei einem anrufenden Teilnehmer oder einem angerufenen Teilnehmer verwendet werden (S102); und

Positionieren des Dialogs gemäß den Indexinformationen durch das Netzwerkelement (S104);

wobei auf der Grundlage, dass das Netzwerkelement ein SIP-Proxy ist, bevor durch das Netzwerkelement die im Dialog befindliche SIP-Nachricht empfangen wird, die die Indexinformationen enthält, ferner umfassend:

Hinzufügen erster Indexinformationen zu einer empfangenen Anfangsnachricht durch den SIP-Proxy vom anrufenden Teilnehmer, wobei die ersten Indexinformationen zum Anzeigen der Position des aktuellen Dialogs am anrufenden Teilnehmer verwendet wird; und Übertragen der Anfangsnachricht, die die ersten Indexinformationen enthält, an den angerufenen Teilnehmer durch den SIP-Proxy; oder

wobei basierend darauf das Netzwerkelement ein SIP User Agent, UA, ist und der anrufende Teilnehmer des Dialogs ist, bevor er durch das Netzwerkelement die im Dialog befindliche SIP-Nachricht empfängt, die die Indexinformationen trägt, ferner umfassend: Übertragen einer ersten Nachricht, die zweiten Indexinformationen trägt, an den angerufenen Teilnehmer durch die SIP-UA, wobei die zweiten Indexinformationen verwendet werden, um die Position des aktuellen Dialogs beim anrufenden Teilnehmer anzuzeigen; oder,
wobei auf der Grundlage, dass das Netzwerkelement eine SIP-UA ist und der angerufene Teilnehmer des Dialogs ist, bevor durch das Netzwerkelement die In-Dialog-SIP-Nachricht empfangen wird, die die Indexinformationen trägt, ferner umfassend: Empfangen der ersten Nachricht durch die SIP-UA vom anrufenden Teilnehmer; und Übertragen einer Antwortnachricht, die dritte Indexinformationen enthält, durch die SIP-UA an den anrufenden Teilnehmer, wobei die dritten Indexinformationen zum Anzeigen der Position des aktuellen Dialogs beim angerufenen Teilnehmer verwendet werden.

2. Verfahren nach Anspruch 1, **dadurch gekennzeichnet, dass** nach dem Übertragen der die ersten Indexinformationen an den angerufenen Teilnehmer tragenden Anfangsnachricht durch den SIP-Proxy, ferner umfassend:

Empfangen einer Antwortnachricht durch den SIP-Proxy, die die ersten Indexinformationen von dem angerufenen Teilnehmer enthält;
Modifizieren der ersten Indexinformationen durch den SIP-Proxy, **dadurch gekennzeichnet, dass** modifizierte erste Indexinformationen zum Anzeigen der Position des aktuellen Dialogs bei dem angerufenen Teilnehmer verwendet werden; und
Übertragen der modifizierte erste Indexinformationen tragenden Antwortnachricht an den anrufenden Teilnehmer durch den SIP-Proxy;
Empfangen der In-Dialog-SIP-Nachricht, die die Indexinformationen enthält, durch das Netzwerkelement umfasst: Empfangen der In-Dialog-SIP-Nachricht durch den SIP-Proxy, die die modifizierten ersten Indexinformationen von dem anrufenden Teilnehmer enthält, oder Empfangen durch den SIP-Proxy der In-Dialog-SIP-Nachricht, die die ersten Indexinformationen von dem angerufenen Teilnehmer trägt;
Positionieren des Dialogs gemäß den Indexinformationen durch das Netzwerkelement umfasst: Erfassen der modifizierten ersten Indexinformationen oder der ersten Indexinformationen aus der im Dialog befindlichen SIP-Nachricht durch den SIP-Proxy; und Positionieren des Dialogs durch den SIP-Proxy gemäß den modifizierten ersten Indexinformationen oder den ersten Indexinformationen.

3. Verfahren nach Anspruch 1, **dadurch gekennzeichnet, dass** das Empfangen der die Indexinformationen tragenden In-Dialog-SIP-Nachricht durch das Netzwerkelement Folgendes umfasst:

Empfangen der im Dialog befindlichen SIP-Nachricht, die die zweiten Indexinformationen enthält, von dem angerufenen Teilnehmer durch die SIP-UA;
Positionieren des Dialogs gemäß den Indexinformationen durch das Netzwerkelement umfasst: Erfassen der zweiten Indexinformationen aus der im Dialog befindlichen SIP-Nachricht durch die SIP-UA; und Positionieren des aktuellen Dialogs durch die SIP-UA gemäß den zweiten Indexinformationen.

4. Verfahren nach Anspruch 1, **dadurch gekennzeichnet, dass** das Empfangen der die Indexinformationen tragenden In-Dialog-SIP-Nachricht durch das Netzwerkelement umfasst: Empfangen der die dritten Indexinformationen tragenden In-Dialog-SIP-Nachricht durch die SIP-UA von dem anrufenden Teilnehmer;
Positionieren des Dialogs gemäß den Indexinformationen durch das Netzwerkelement umfasst: Anschaffung der dritten Indexinformationen aus der im Dialog befindlichen SIP-Nachricht durch die SIP-UA; und Positionieren des aktuellen Dialogs durch die SIP-UA gemäß den dritten Indexinformationen.

5. Verfahren nach einem der Ansprüche 1 bis 4, **dadurch gekennzeichnet, dass** die Indexinformationen von einem der folgenden Felder getragen werden: Request-uri, contact, from, to, Route und Record-Route.

6. Vorrichtung zur Positionierung eines Sitzungseinleitungsprotokolldialogs, SIP-Dialogs, angewendet an einem Netzwerkelement, **dadurch gekennzeichnet, dass** dieses umfasst:

eine Empfangskomponente (72), die zum Empfangen einer In-Dialog-SIP-Nachricht konfiguriert ist, die Indexinformationen enthält, wobei die Indexinformationen zum Anzeigen einer Position eines Dialogs bei einem anrufenden Teilnehmer oder einem angerufenen Teilnehmer verwendet werden; und
eine Positionierungskomponente (74), die dafür konfiguriert ist, um den Dialog gemäß den Indexinformationen zu positionieren;
wobei die Vorrichtung ferner umfasst:

eine Hinzufügungskomponente (86), die darauf basierend, dass das Netzwerkelement ein SIP-Proxy ist, dafür konfiguriert ist, erste Indexinformationen zu einer anfänglichen Nachricht hinzuzufügen, die von dem anrufenden Teilnehmer empfangen wurde, wobei die ersten Indexinformationen zum Anzeigen der Position des aktuellen Dialogs bei dem anrufenden Teilnehmer verwendet werden; und eine erste Sendekomponente (88), die dafür konfiguriert ist, die Anfangsnachricht, die die ersten Indexinformationen trägt, an den angerufenen Teilnehmer zu senden;

wobei die Vorrichtung ferner Folgendes umfasst: eine erste Übertragungskomponente (1006), darauf basierend, dass das Netzwerkelement ein SIP- User Agent, UA, ist und der SIP-UA der anrufende Teilnehmer des Dialogs ist, eine Anfangsnachricht mit zweiten Indexinformationen an den angerufenen Teilnehmer zu übertragen, wobei die zweiten Indexinformationen zum Anzeigen der Position des aktuellen Dialogs beim anrufenden Teilnehmer verwendet werden;

wobei die Vorrichtung ferner Folgendes umfasst: eine zweite Empfangskomponente, die basierend darauf, dass das Netzwerkelement ein SIP-UA ist und dass die SIP-UA der angerufene Teilnehmer des Dialogs ist, dafür konfiguriert ist, die ursprüngliche Nachricht vom anrufenden Teilnehmer zu erhalten; und eine zweite Sendekomponente, die dafür konfiguriert ist, eine Antwortnachricht mit dritten Indexinformationen an den anrufenden Teilnehmer zu senden, wobei dritten Indexinformationen zum Anzeigen der Position des aktuellen Dialogs bei dem angerufenen Teilnehmer verwendet werden.

7. Vorrichtung nach Anspruch 6, ferner umfassend:

eine zweite Empfangskomponente, die dafür konfiguriert ist, eine Antwortnachricht zu empfangen, die die ersten Indexinformationen von dem angerufenen Teilnehmer trägt;

eine Änderungskomponente, die zum Ändern der ersten Indexinformationen konfiguriert ist, wobei geänderte erste Indexinformationen zum Anzeigen der Position des aktuellen Dialogs bei dem angerufenen Teilnehmer verwendet werden; und

eine zweite Sendekomponente, die dafür konfiguriert ist, die Antwortnachricht, die die modifizierten ersten Indexinformationen trägt, an den anrufenden Teilnehmer zu senden;

die erste Empfangskomponente (82) umfasst: ein Empfangselement, das dafür konfiguriert ist, die In-Dialog-SIP-Nachricht zu empfangen, die die modifizierten ersten Indexinformationen von der anrufenden Partei trägt, oder die In-Dialog-SIP-Nachricht zu empfangen, die die ersten Indexinformationen von der angerufenen Partei trägt;

die Positionierungskomponente (84) umfasst: ein Erfassungselement, das dafür konfiguriert ist, die modifizierten ersten Indexinformationen oder die ersten Indexinformationen aus der In-Dialog-SIP-Nachricht zu erfassen; und ein Positionierungselement, das dafür konfiguriert ist, den Dialog gemäß den modifizierten ersten Indexinformationen oder gemäß den ersten Indexinformationen zu positionieren.

8. Vorrichtung nach Anspruch 6, **dadurch gekennzeichnet, dass** das erste Empfangsmodul (1002) umfasst:

ein erstes Empfangselement (10022), das dafür konfiguriert ist, die im Dialog befindliche SIP-Nachricht zu empfangen, die die zweiten Indexinformationen von dem angerufenen Teilnehmer trägt;

die Positionierungskomponente (1004) umfasst: ein erstes Erfassungselement (10042), das dafür konfiguriert ist, die zweiten Indexinformationen aus der In-Dialog-SIP-Nachricht zu erfassen; und ein erstes Positionierungselement (10044), das dafür konfiguriert ist, den aktuellen Dialog gemäß den zweiten Indexinformationen zu positionieren.

9. Endgerät nach Anspruch 6, **dadurch gekennzeichnet, dass** das erste Empfangsmodul Folgendes umfasst:

ein zweites Empfangselement, das dafür konfiguriert ist, die im Dialog befindliche SIP-Nachricht zu empfangen, die die dritten Indexinformationen von dem anrufenden Teilnehmer trägt;

die Positionierungskomponente umfasst: ein zweites Erfassungselement, das dafür konfiguriert ist, die dritten Indexinformationen aus der In-Dialog-SIP-Nachricht zu erfassen; und ein zweites Positionierungselement, das dafür konfiguriert ist, den aktuellen Dialog gemäß der dritten Indexinformation zu positionieren.

**Revendications**

1. Procédé de positionnement d'un dialogue de Protocole d'initiation de session, SIP, **caractérisé en ce qu'**il comprend :

la réception, par un élément de réseau, d'un message de SIP dans le dialogue portant des informations d'index, les informations d'index servant à indiquer la position d'un dialogue chez un appelant ou chez un appelé (S102); et le positionnement, par l'élément de réseau, du dialogue en fonction des informations d'index (S104);

selon que l'élément de réseau est un mandataire de SIP ou non, avant la réception, par l'élément de réseau, du message de SIP dans le dialogue portant les informations d'index, il comprend en outre : l'ajout, par le mandataire de SIP, d'une première information d'index à un message initial reçu de l'appelant, la première information d'index servant à indiquer la position du dialogue actuel chez l'appelant; et la transmission, par le mandataire de SIP, du message initial portant les premières informations d'index à l'appelé ; ou

selon que l'élément de réseau est un Agent utilisateur, UA, de SIP et qu'il est l'appelant du dialogue, avant la réception, par l'élément de réseau, du message de SIP dans le dialogue portant les informations d'index ou non, il comprend en outre : la transmission, par l'UA de SIP, d'un message initial portant des deuxièmes informations d'index à l'appelé, les deuxièmes informations d'index servant à indiquer la position du dialogue actuel chez l'appelant; ou,

selon que l'élément de réseau est un UA de SIP et est l'appelé du dialogue ou non, avant la réception, par l'élément de réseau, du message de SIP dans le dialogue portant les informations d'index, il comprend en outre : la réception, par l'UA de SIP, du message initial de l'appelant ; et la transmission, par l'UA de SIP, d'un message de réponse portant des troisièmes informations d'index à l'appelant, les troisièmes informations d'index servant à indiquer la position du dialogue en cours chez l'appelé.

2. Procédé selon la revendication 1, **caractérisé en ce que**, après la transmission, par le mandataire de SIP, du message initial portant les premières informations d'index à l'appelé, il comprend en outre :

la réception, par le mandataire de SIP, d'un message de réponse portant les premières informations d'index en provenance de l'appelé;

la modification, par le mandataire de SIP, des premières informations d'index, **caractérisée en ce qu'**une première information d'index modifiée sert à indiquer la position du dialogue actuel chez l'appelé; et

la transmission, par le mandataire de SIP, du message de réponse portant les premières informations d'index modifiées à l'appelant;

la réception, par l'élément de réseau, du message de SIP dans le dialogue portant les informations d'index, comprend : la réception, par le mandataire de SIP, du message de SIP dans le dialogue portant les premières informations d'index modifiées provenant de l'appelant ou la réception, par le mandataire de SIP, du message de SIP dans le dialogue portant les premières informations d'index en provenance de l'appelé;

le positionnement, par l'élément de réseau, du dialogue en fonction des informations d'index comprend : l'acquisition, par le mandataire de SIP, des premières informations d'index modifiées ou des premières informations d'index du message de SIP dans le dialogue ; et le positionnement, par le mandataire de SIP, du dialogue en fonction des premières informations d'index modifiées ou des premières informations d'index.

3. Procédé selon la revendication 1, **caractérisé en ce que** la réception, par l'élément de réseau, du message de SIP dans le dialogue portant les informations d'index comprend:

la réception, par l'UA de SIP, du message de SIP dans le dialogue portant les deuxièmes informations d'index en provenance de l'appelé ;

le positionnement, par l'élément de réseau, du dialogue en fonction des informations d'index comprend : l'acquisition, par l'UA de SIP, des deuxièmes informations d'index du message de SIP dans le dialogue ; et le positionnement, par l'UA de SIP, du dialogue en cours en fonction des deuxièmes informations d'index.

4. Procédé selon la revendication 1, **caractérisé en ce que** la réception, par l'élément de réseau, du message de SIP dans le dialogue portant les informations d'index comprend: la réception par l'UA de SIP du message de SIP dans le dialogue portant les troisièmes informations d'index en provenance de l'appelant;

le positionnement, par l'élément de réseau, du dialogue en fonction des informations d'index comprend : l'acquisition, par l'UA de SIP, des troisièmes informations d'index du message de SIP dans le dialogue ; et le positionnement, par l'UA de SIP, du dialogue en cours en fonction des troisièmes informations d'index.

5. Procédé selon l'une quelconque des revendications 1 à 4, **caractérisé en ce que** les informations d'index sont portées par l'un des champs suivants : Request-uri, contact, from, to, Route et Record-Route.

6. Dispositif de positionnement de dialogue de Protocole d'initiation de session, SIP, appliqué à un élément de réseau, **caractérisé en ce qu'**il comprend :

un composant de réception (72), configuré pour recevoir un message de de SIP dans le dialogue portant des informations d'index, les informations d'index servant à indiquer la position d'un dialogue chez un appelant ou chez un appelée; et

un composant de positionnement (74), configuré pour positionner le dialogue en fonction des informations d'index ;

le dispositif comprenant en outre:

un composant d'ajout (86), configuré pour, selon que l'élément de réseau est un mandataire de SIP ou non, ajouter des premières informations d'index à un message initial reçu de l'appelant, les premières informations d'index servant à indiquer la position du dialogue actuel chez l'appelant ; et un premier composant de transmission (88), configuré pour transmettre le message initial portant les premières informations d'index à l'appelé ;

le dispositif comprenant en outre : un premier composant de transmission (1006), configuré pour, selon que l'élément de réseau est un Agent utilisateur, UA, et que l'UA de SIP est l'appelant du dialogue ou non, transmettre un message initial portant des deuxièmes informations d'index à l'appelé, les deuxièmes informations d'index servant à indiquer la position du dialogue actuel chez l'appelant ;

le dispositif comprenant en outre : un second composant de réception, configuré pour, selon que l'élément de réseau est un UA de SIP et que l'UA de SIP est l'appelé du dialogue, recevoir le message initial en provenance de l'appelant; et un second composant de transmission, configuré pour transmettre un message de réponse portant les troisièmes informations d'index à l'appelant, ls troisièmes informations d'index servant à indiquer la position du dialogue actuel chez l'appelé.

**7.** Dispositif selon la revendication 6, comportant en outre :

un second composant de réception, configuré pour recevoir un message de réponse portant les premières informations d'index en provenance de l'appelé ;

un composant de modification, configuré pour modifier les premières informations d'index, une première information d'index modifiée servant à indiquer la position du dialogue actuel chez l'appelé ; et

un second composant de transmission, configuré pour transmettre le message de réponse portant les premières informations d'index modifiées à l'appelant ;

le premier composant de réception (82) comprend : un élément de réception, configuré pour recevoir le message de SIP dans le dialogue portant les premières informations d'index modifiées de l'appelant ou pour recevoir le message de SIP dans le dialogue portant les premières informations d'index en provenance de l'appelé ;

le composant de positionnement (84) comprend : un élément d'acquisition, configuré pour acquérir les premières informations d'index modifiées ou les premières informations d'index du message de SIP dans le dialogue ; et un élément de positionnement, configuré pour positionner le dialogue en fonction des premières informations d'index modifiées ou des premières informations d'index.

**8.** Dispositif selon la revendication 6, **caractérisé en ce que** le premier composant de réception (1002) comprend :

un premier élément de réception (10022), configuré pour recevoir le message de SIP dans le dialogue portant les deuxièmes informations d'index en provenance de l'appelé ;

le composant de positionnement (1004) comprend : un premier élément d'acquisition (10042), configuré pour acquérir les deuxièmes information d'index à partir du message de SIP dans le dialogue ; et un premier élément de positionnement (10044), configuré pour positionner le dialogue actuel en fonction des deuxièmes informations d'index.

**9.** Dispositif selon la revendication 6, **caractérisé en ce que** le premier composant de réception comprend :

un second élément de réception, configuré pour recevoir le message de SIP dans le dialogue portant les troisièmes informations d'index de l'appelant ;

le composant de positionnement comprend : un second élément d'acquisition, configuré pour acquérir les troisièmes informations d'index à partir du message de SIP dans le dialogue ; et un second élément de positionnement, configuré pour positionner le dialogue actuel en fonction des troisièmes informations d'index.

a network element receives an in-dialog SIP
message with index information, wherein the index
information is used for indicating a position of a
dialog at a calling party or a called party

S102

the network element positions the dialog according
to the index information

S104

## Fig. 1

SIP UA

SIP Proxy

SIP UA

S202
INVITE

S204
INVITE
Record-Route: <sip:proxy.com;lr>;x-did=S2-
S22

S206
INVITE 200
Record-Route: <sip:proxy.com;lr>;x-did=S2-
S22

S208
INVITE 200
Record-Route: <sip:proxy.com;lr>;x-did=S2-
S2S2

ACK
Route: <sip:proxy.com;lr>;x-did=S2-
S2S2

S212
ACK

S214
UPDATE
Route: <sip:proxy.com;lr>;x-did=S2-
S22

S216
UPDATE

S218
UPDATE 200

S220
UPDATE 200

S222
BYE
Route: <sip:proxy.com;lr>;x-did=S2-
S2S2

S224
BYE

S228
BYE 200

S226
BYE 200

## Fig. 2

16

**Fig. 3**

| SIP UA | | SIP NE |
|---|---|---|

INVITE — S402

INVITE S400 — S404
Contact:<sip:bod@ua.com;x-did=1-1>

ACK(request-uri: sip:bod@ua.com;x-did=1-1) — S406

UPDATE(request-uri: sip:bod@ua.com;x-did=1-1) — S408

UPDATE S400 — S410

BYE — S412

BYE S400 — S414

## Fig. 4

| SIP UA | | SIP NE |
|--------|---|--------|

S502

INVITE
From: <sip:alice@ua.com>;tag=abxcd-1-1

S504

INVITE 200

S506

ACK

S508

UPDATE
To: <sip:alice@ua.com>;tag=abxcd-1-1

S510

UPDATE 200

S512

BYE

S514

BYE 200

**Fig.5**

**Fig.6**

**Fig.7**

First receiving component
82

Positioning component 84

**Fig.8**

Adding component 86

First transmissing module
88

First receiving component
82

Positioning component 84

**Fig.9**

First receiving component
1002

Positioning component 1004

**Fig.10**

First transmissing component 1006

First receiving element
10022

First receiving component 1002

First acquiring element
10042

First positioning element
10044

Positioning component 1004

**Fig.11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2010042731 A

### Non-patent literature cited in the description

- *An INVITE-Initiated Dialog Event Package for the Session Initiation Protocol (SIP); rfc 4235.txt,* 01 November 2005